# FASCICULE DE BREVET EUROPEEN

(11) **EP 4 282 630 B1**
(45) Date de publication et mention de la délivrance du brevet: **12.03.2025**
(21) Numéro de dépôt: 23174907.8
(22) Date de dépôt: 23.05.2023
(51) Int. Cl.: B29C 70/86, B29C 70/38, B29C 70/20, B29C 70/32, B29C 41/08, B29C 41/04, B29C 41/20, B29C 41/22, B29C 53/56, B29C 35/08, B29L 31/00

(54) **PROCÉDÉ DE FABRICATION D'UN RÉSERVOIR COMPOSITE**
VERFAHREN ZUR HERSTELLUNG EINES VERBUNDTANKS
METHOD FOR MANUFACTURING A COMPOSITE TANK

(30) Priorité: 23.05.2022 FR 2204921
(43) Date de publication de la demande: 29.11.2023
(73) Titulaire: Etablissements MAGYAR, 21000 Dijon (FR)
(72) Inventeur: MAGYAR, Daniel, 75012 Paris (FR); MAGYAR, Laurent, 75001 Paris (FR)
(74) Mandataire: Cabinet Camus Lebkiri

(56) Documents cités:
- EP-A1- 1 211 052
- DE-A1- 102017 219 380
- US-A1- 2021 237 335

## Description

### DOMAINE TECHNIQUE DE L'INVENTION

Le domaine technique de l'invention est celui des réservoirs composites renforcés par des fibres de carbone, d'aramide, de verre ou autres fibres de renforcement destinés au transport et au stockage de gaz sous hautes pressions.

La présente invention concerne plus particulièrement son procédé de fabrication.

### ARRIERE-PLAN TECHNOLOGIQUE DE L'INVENTION

DE 10 2017 219380 A1 divulgue un procédé de fabrication d'un réservoir composite, renforcé par des fibres de renforcement et comprenant deux fonds.

Il existe plusieurs types de réservoirs :
- Type 1 : métalliques
- Type 2 : métalliques bobinés de fibres sur la virole
- Type 3 : à liner métallique intégralement bobinés de matériaux composites
- Type 4 : à liner plastique intégralement bobinés de matériaux composites
- Type 5 : intégralement en matériaux composites sans liner.

Un réservoir entièrement bobiné de matériaux composites est généralement constitué de deux éléments principaux. Un liner, qui sera en contact direct avec le produit transporté, et une couche structurelle qui maintient la cohésion du matériau et lui apporte ses propriétés mécaniques. Cette dernière est généralement déposée sur le liner grâce à un procédé d'enroulement filamentaire robotisé. Il consiste à enrouler des fibres préalablement imprégnées de résine (voie humide) ou des préimprégnés sur un mandrin qui fait office de moule. Dans l'exemple cité précédemment, c'est le liner qui joue le rôle de mandrin. Ce dernier est mis en rotation afin d'être entièrement recouvert de plusieurs couches de fibres. La dépose des fibres s'effectue avec un robot capable d'appliquer des angles de dépose qui modulent les propriétés finales du matériau. La tension appliquée sur les fibres durant l'étape de dépose assure un compactage efficace du matériau.

Pour la fabrication de certaines pièces, comme par exemple un réservoir de type 5 (sans liner) pour l'hydrogène pressurisé ou cryogénique, il est nécessaire de retirer le mandrin après enroulement des fibres. Cette technique est connue sous le nom d'enroulement filamentaire sur mandrin perdu. Ce procédé nécessite la fabrication préalable d'un mandrin en utilisant un matériau fusible ou soluble après enroulement. Plusieurs matériaux facilement solubles comme mandrin soluble peuvent être utilisées, parmi lesquels :
- l'alcool polyvinylique : soluble dans l'eau
- la mousse de polystyrène : soluble dans l'acétone, le styrène, ... ou fusible à T > 220°C
- l'indium : fusible à T > 160 °C

Ces méthodes de mise en œuvre sont déjà utilisées industriellement mais elles ajoutent plusieurs étapes de fabrication fastidieuses et chronophages.

### Résumé de l'invention

L'invention offre une solution aux problèmes évoqués précédemment, en permettant de réaliser un réservoir de type 5 sans avoir besoin de mandrin perdu.

L'invention concerne un procédé de fabrication d'un réservoir composite d'axe X, renforcé par des fibres de renforcement et comprenant deux fonds, ledit procédé est tel qu'il comprend les étapes suivantes :
- réalisation d'un squelette composite de forme cylindrique à partir de fibres de renforcement préimprégnés tendues, immédiatement activée, et enroulées entre les deux fonds,
- injection d'une résine liquide d'étanchéité dans le squelette composite,
- centrifugation de la résine sur le squelette composite,
- polymérisation de la résine.

On entend ici par « activé », polymérisé, activé thermiquement, activé chimiquement ou activé photochimiquement.

Les fonds en composite participent à la tenue mécanique du réservoir. Ils peuvent être obtenus par infusion, injection de résine sur les renforts ou par tout autre procédé permettant l'obtention de pièces composites structurelles. La résine est de la famille des époxy, acrylates, vinylester, polyester ou résine réactive thermoplastique.

L'embase métallique permettant la connexion avec les accessoires de sécurité ou de distribution du gaz est avantageusement insérée dans chaque fond afin d'assurer l'étanchéité au gaz. Pour s'assurer d'une parfaite cohésion entre l'embase et le matériau constitutif du fond, le matériau métallique subit un traitement de surface comme recommandé par les normes en vigueur (par exemple la NF EN 13887).

La polymérisation de la résine d'imprégnation durant la phase de dépose des fibres du squelette permet de faciliter la mise en place des renforts, de figer sa forme entre les deux fonds sans support et de réduire les glissements de fibre. Cette polymérisation peut être faite par photopolymérisation ou thermiquement. Par exemple de la résine époxy polymérisée thermiquement.

Avec d'autres résines, la réalisation du squelette se fait avec des fibres qui sont préimprégnées de résine thermoplastique ou thermodurcissable. Dans ce cas, on utilise une tête de dépose qui applique la bande préimprégnée sur l'un des fonds et la tire sous tension jusqu'à l'autre fond. Pour répondre aux efforts générés par la tension la bande est rendue suffisamment collante pour rester sur le fond par son activation thermique, chimique ou photochimique.

Selon un premier mode de réalisation, les fibres de renforcement sont bobinées jusqu'à la fermeture complète du squelette composite. Les fibres de renforcement sont bobinées suivant un enroulement hélicoïdal ou longitudinal en s'appuyant sur chaque fonds pour assurer la tension des fibres. Le squelette ne comprend pas d'interstices entre les fibres et est ainsi quasiment étanche.

Selon un deuxième mode de réalisation, les fibres de renforcement sont bobinées jusqu'à la fermeture partielle du squelette composite. Les fibres de renforcement sont bobinées suivant un enroulement hélicoïdal ou longitudinal en s'appuyant sur chaque fonds pour assurer la tension des fibres Dans ce mode de réalisation, le squelette est plus léger car il comprend moins de fibres de renforcement.

Avantageusement, selon le deuxième mode de réalisation, un contre moule est disposé autour du squelette composite avant l'injection de la résine d'étanchéité. Dans ce deuxième mode, le squelette peut présenter des interstices entre les fibres qui pourraient laisser passer de la résine, le contre moule garantit que la résine reste dans le squelette.

Selon le type de résine, le mode de polymérisation, de polycondensation ou de fusion de la résine d'étanchéité le contre-moule peut être munis de système de chauffe et de refroidissement.

Avantageusement, une résine photopolymérisable peut-être injectée autour du squelette, dans ce cas, une lampe UV est introduite par le centre de l'embase afin d'accélérer la polymérisation.

Avantageusement, une couche structurelle est bobinée sur le squelette composite. Cette couche structurelle maintient la cohésion des matériaux et leur apporte ses propriétés mécaniques.

Avantageusement, les fibres de renforcement sont enroulées avec un angle de dépose compris entre 0° et ±10° par rapport à l'axe X. La trajectoire programmée des fibres donne lieu à une réduction du diamètre au centre du squelette. Cet effet de « cintrage » dit forme hyperboloïde s'explique par le fait qu'une fibre va suivre une trajectoire rectiligne entre les deux points d'accroche. S'ils ne sont pas alignés l'un en face de l'autre, l'angle de dépose va créer cet effet qui n'est pas désirable pour fabriquer un réservoir sous pression. Grace à l'application d'un angle de dépose très faible, voire quasi-nul, les fibres enroulées sont presque parallèles entre elles, ce qui réduit la forme hyperboloïde. Cet enroulement permet d'obtenir un squelette tubulaire dont le diamètre est constant sur l'intégralité de la structure. La photopolymérisation instantanée de la résine permet de fixer les fibres sur le fond par effet de collage et d'aligner les deux points d'accroche.

Lorsque les fibres ou mèches sont préimprégnées, le placement de fibre permet d'éliminer complètement cette forme hyperboloïde en alignant parfaitement les deux points d'accroche.

Avantageusement, les fibres de renforcement comprennent des fibres de carbone. Ces fibres ont l'avantage d'être légères et très résistantes.

Avantageusement, les fibres de renforcement comprennent des fibres de verre. Les fibres de verre sont moins chères, plus lourdes que les fibres de carbone et résistantes.

Avantageusement, les fibres de renforcement comprennent des fibres d'aramide. Les fibres d'aramides sont plus chères mais conduisent à des composites plus légers que les fibres de carbone.

Avantageusement, la polymérisation est une photopolymérisation. Plusieurs types de réactions de photopolymérisation peuvent être utilisées pour ce procédé d'enroulement filamentaire sans mandrin. De manière non exhaustive, différents types de photopolymérisation sont possibles:
- la photopolymérisation radicalaire : utilisation d'un radical libre comme centre actif de polymérisation. Utilisable avec une résine en partie ou totalement formulée avec des acrylates, des méthacrylates, des polyesters insaturés, des vinylester,
- la photopolymérisation cationique : propagation de la réaction de polymérisation grâce à un centre actif cationique. Utilisable avec une résine en partie ou totalement formulée avec des époxydes, des lactones, des oxétanes,
- la photopolymérisation anionique : polymérisation induite par la présence d'un centre actif anionique. Adaptée pour une résine en partie ou totalement formulée avec des époxydes, des thiols, des lactides,

Avantageusement, la réalisation du squelette composite est faite par un bras robotisé comprenant une tête de dépose des fibres de renforcement et une source de lumière. C'est le même bras qui dépose les fibres sous tension et fait la photopolymérisation.

Il aussi possible d'enrouler les fibres du squelette selon un angle de +/- 10° mais sans résine. C'est ensuite la centrifugation de la résine d'étanchéité amenée à un état liquide (faible viscosité) dans le squelette composite qui assure l'imprégnation de ces fibres, la résine est ensuite polymérisée. Les autres caractéristiques du procédé ci-dessus peuvent être combinées avec ce mod de réalisation.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig.1] est une vue schématique d'une première étape du procédé selon l'invention,
[Fig.2] est une vue en coupe d'un des fonds,
[Fig.3] est une vue schématique d'une deuxième étape du procédé selon l'invention,
[Fig.4] est une vue de l'état du squelette en cours de réalisation,
[Fig.5] est une vue en coupe d'un squelette à la fin de la deuxième étape,
[Fig.6] est une vue schématique d'une troisième étape du procédé selon l'invention,
[Fig.7] est une variante de la troisième étape du procédé selon l'invention,
[Fig.8] est une vue en coupe d'un squelette à la fin de la troisième étape,
[Fig.9] est une vue schématique d'une quatrième étape du procédé selon l'invention,

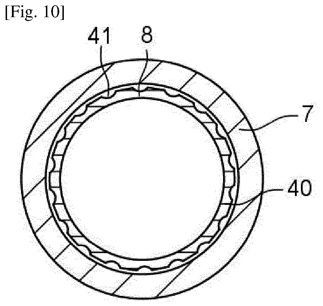

[Fig.10] est une vue en coupe d'un squelette à la fin de la quatrième étape.

### DESCRIPTION DETAILLEE

Sauf précision contraire, un même élément apparaissant sur des figures différentes présente une référence unique.

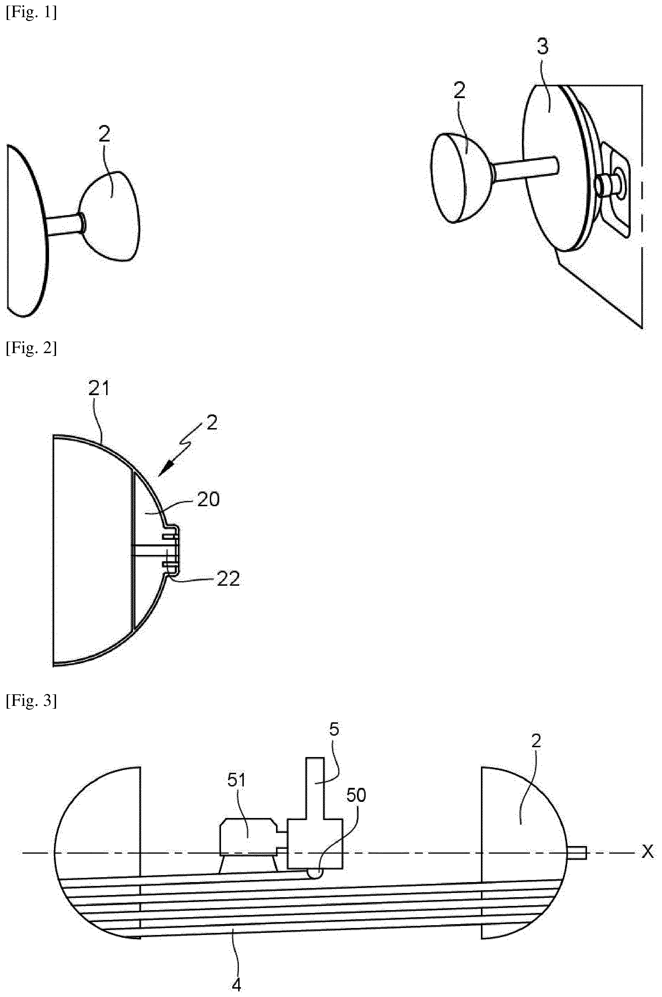

Les réservoirs composites comprennent deux fonds 2 en matériaux composites ou autres matériaux (par exemple fond métallique) avec embases métallique 20, par exemple en acier comme visible [Fig.2] et une paroi 21. Autour des deux fonds 2 sont tirées des fibres 4 qui constituent la paroi composite du squelette composite 40 avec la résine. Ces fibres peuvent par exemple se présenter sous forme de mèches comprenant des milliers de fibres.

La première étape consiste à l'installation de chacun des fonds 2 sur un banc d'enroulement 3, comme illustré [Fig.1].

Un des fond 2, visible [Fig.2], comprend une ouverture 22 permettant l'accès à l'intérieur du réservoir 1.

Des fibres de renforcement 4 sont ensuite tirées et enroulées sur les deux fonds 2 de façon à créer un squelette 40 de forme cylindrique à la deuxième étape. [Fig.3], les fibres 4 sont déposées avec un faible angle par rapport à l'axe X du réservoir par une tête de dépose 50 d'un bras robotisé 5. La tête de dépose 50 est reliée à une source de lumière 51 comme une LED placée après la tête de dépose 50 dans le sens de dépose des fibres 4, de cette façon les fibres préimprégnées sont photopolymérisées tout de suite ce qui leur permet de ne pas s'affaisser et de rester rigides. La polymérisation des fibres peut également être réalisée par chauffage en utilisant une source de chaleur à la place de la source de lumière.

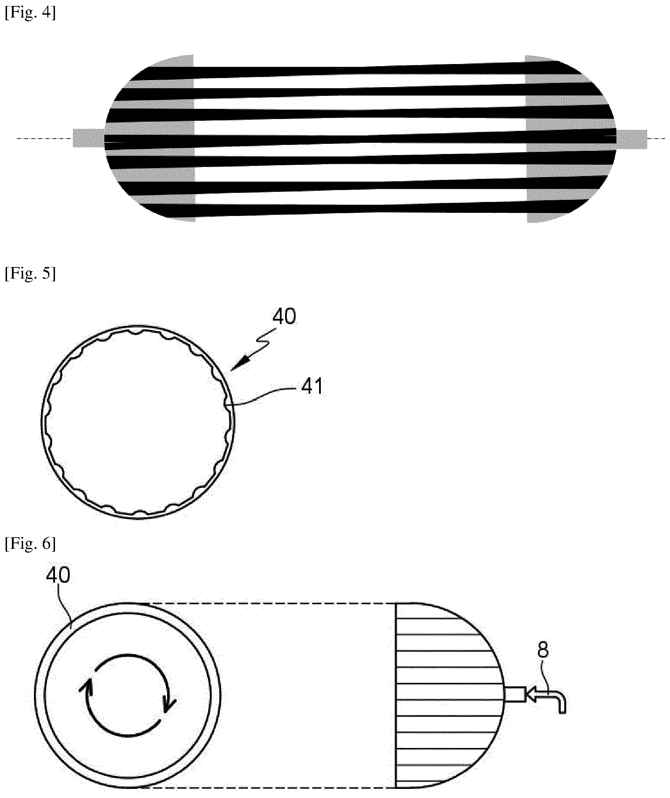

On peut voir sur la coupe de la [Fig.5], que les fibres constituant le squelette 40 présente des aspérités 41 notamment à l'intérieur.

A cette étape on peut soit bobiner jusqu'à fermer complètement les fibres du squelette 40, soit bobiner partiellement en laissant des interstices entre les fibres.

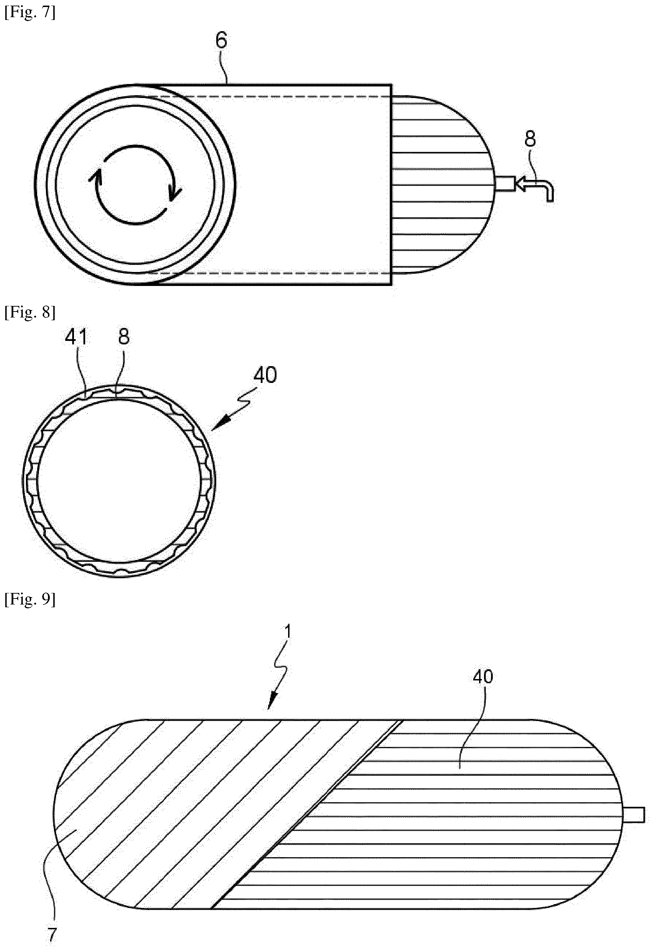

Dans le premier cas, la troisième étape est illustrée [Fig.6]. On injecte une résine liquide 8 réactive à l'intérieur du squelette 40 par l'ouverture 22, puis on fait tourner l'ensemble afin que la résine 8 se dépose sur toute la périphérie intérieure du squelette 40 par la force centrifuge. La résine 8 va lisser les aspérités 41 et créer une couche d'étanchéité, l'intérieur du réservoir sera à la fois lisse et étanche (cf. [Fig.8]). L'épaisseur de la couche d'étanchéité peut varier de quelques dixièmes de millimètres à quelques millimètres, préférentiellement de 3 à 5 mm

Dans le deuxième cas, la troisième étape est illustrée [Fig.7]. Comme le squelette 40 présente des interstices dans lesquels la résine 8 pourrait s'échapper, on pose un contre moule 6 autour du squelette 40 avant l'introduction de la résine 8, puis on procède comme pour le premier cas en faisant tourner les fonds 2 et le squelette 40. Le contre moule 6 est ensuite retiré. Ici aussi, on obtient un squelette étanche avec un intérieur lisse.

La quatrième étape visible à la [Fig.9], consiste à enrouler une couche structurelle 7 sur le squelette.

Ce procédé de fabrication peut être complété, si nécessaire, d'une étape d'étuvage pour finaliser la polymérisation des différentes couches du composite.

Le procédé selon l'invention de fabrication de réservoir composite présente l'avantage de pouvoir être réalisée sur une seule et même installation d'enroulement filamentaire. Elle permet de réduire considérablement le temps de fabrication des différentes étapes et de s'affranchir d'un mandrin perdu. De plus, chaque opération est robotisée afin d'avoir un procédé de mise en œuvre fiable et reproductible.

Les résines utilisées peuvent être des résines thermodurcissables ou résines des thermoplastiques.

## Revendications

1. Procédé de fabrication d'un réservoir composite d'axe X, renforcé par des fibres de renforcement (4) et comprenant deux fonds (2), tel qu'il comprend les étapes suivantes :
- réalisation d'un squelette composite (40) de forme cylindrique à partir des fibres de renforcement (4) préimprégnées tendues, immédiatement activées et enroulées entre les deux fonds (2),
- injection d'une résine liquide (5) d'étanchéité dans le squelette composite (40),
- centrifugation de la résine (5) sur le squelette composite (40),
- polymérisation de la résine (5).

2. Procédé de fabrication d'un réservoir composite selon la revendication précédente, **caractérisé en ce que** les fibres de renforcement (4) sont bobinées jusqu'à la fermeture complète du squelette composite (40).

3. Procédé de fabrication d'un réservoir composite selon la revendication 1, **caractérisé en ce que** les fibres de renforcement (4) sont bobinées jusqu'à la fermeture partielle du squelette composite (40).

4. Procédé de fabrication d'un réservoir composite selon la revendication précédente, **caractérisé en ce qu'**un contre moule (6) est disposé autour du squelette composite (40) avant l'injection de la résine liquide (5) d'étanchéité.

5. Procédé de fabrication d'un réservoir composite selon une des revendications précédentes, **caractérisé en ce qu'**une couche structurelle (7) est bobinée sur le squelette composite (40).

6. Procédé de fabrication d'un réservoir composite selon une des revendications précédentes, **caractérisé en ce que** les fibres de renforcement (4) sont enroulées avec un angle de dépose compris entre 0 et ±10° par rapport à l'axe X.

7. Procédé de fabrication d'un réservoir composite selon une des revendications précédentes, **caractérisé en ce que** les fibres de renforcement (4) comprennent des fibres de carbone.

8. Procédé de fabrication d'un réservoir composite selon une des revendications précédentes, **caractérisé en ce que** les fibres de renforcement (4) comprennent des fibres de verre.

9. Procédé de fabrication d'un réservoir composite selon une des revendications précédentes, **caractérisé en ce que** les fibres de renforcement (4) comprennent des fibres d'aramide.

10. Procédé de fabrication d'un réservoir composite selon une des revendications précédentes, **caractérisé en ce que** la polymérisation est une photopolymérisation.

11. Procédé de fabrication d'un réservoir composite selon une des revendications précédentes, **caractérisé en ce que** la réalisation du squelette composite (4) est faite par un bras robotisé (5) comprenant une tête de dépose (50) des fibres de renforcement et une source de lumière (51).

## Patentansprüche

1. Verfahren zur Herstellung eines Verbundbehälters mit X-Achse, der mit Verstärkungsfasern (4) verstärkt ist und zwei Böden (2) aufweist, welches die folgenden Schritte umfasst:
- Herstellung eines Verbundskeletts (40) mit zylindrischer Form aus den gespannten, sofort aktivierten und zwischen den beiden Böden (2) gewickelten, vorimprägnierten Verstärkungsfasern (4),
- Einspritzen eines flüssigen Harzes (5) in das Verbundskelett (40) zum Abdichten,
- Schleudern des Harzes (5) auf dem Verbundskelett (40),
- Polymerisation des Harzes (5).

2. Verfahren zur Herstellung eines Verbundbehälters nach dem vorhergehenden Anspruch, **dadurch gekennzeichnet, dass** die Verstärkungsfasern (4) bis zum vollständigen Verschluss des Verbundskeletts (40) gewickelt werden.

3. Verfahren zur Herstellung eines Verbundbehälters nach Anspruch 1, **dadurch gekennzeichnet, dass** die Verstärkungsfasern (4) bis zum teilweisen Verschluss des Verbundskeletts (40) gewickelt werden.

4. Verfahren zur Herstellung eines Verbundbehälters nach dem vorhergehenden Anspruch, **dadurch gekennzeichnet, dass** eine Gegenform (6) um das Verbundskelett (40) herum angeordnet wird, bevor das flüssige Harz (5) zur Abdichtung eingespritzt wird.

5. Verfahren zur Herstellung eines Verbundbehälters nach einem der vorhergehenden Ansprüche, **dadurch gekennzeichnet, dass** eine Strukturschicht (7) auf das Verbundskelett (40) gewickelt wird.

6. Verfahren zur Herstellung eines Verbundbehälters nach einem der vorhergehenden Ansprüche, **dadurch gekennzeichnet, dass** die Verstärkungsfasern (4) mit einem Auftragwinkel zwischen 0 und -±10° zur X-Achse gewickelt werden.

7. Verfahren zur Herstellung eines Verbundbehälters nach einem der vorhergehenden Ansprüche, **dadurch gekennzeichnet, dass** die Verstärkungsfasern (4) Kohlenstofffasern umfassen.

8. Verfahren zur Herstellung eines Verbundbehälters nach einem der vorhergehenden Ansprüche, **dadurch gekennzeichnet, dass** die Verstärkungsfasern (4) Glasfasern umfassen.

9. Verfahren zur Herstellung eines Verbundbehälters nach einem der vorhergehenden Ansprüche, **dadurch gekennzeichnet, dass** die Verstärkungsfasern (4) Aramidfasern umfassen.

10. Verfahren zur Herstellung eines Verbundbehälters nach einem der vorhergehenden Ansprüche, **dadurch gekennzeichnet, dass** die Polymerisation eine Photopolymerisation ist.

11. Verfahren zur Herstellung eines Verbundbehälters nach einem der vorhergehenden Ansprüche, **dadurch gekennzeichnet, dass** die Herstellung des Verbundskeletts (4) durch einen Roboterarm (5) erfolgt, der einen Kopf (50) zum Auftragen der Verstärkungsfasern und eine Lichtquelle (51) umfasst.

## Claims

1. A method for manufacturing a composite tank of axis X, reinforced by reinforcing fibres (4) and comprising two bottoms (2), such that it comprises the following steps of:
- making a cylindrical-shaped composite backbone (40) from the reinforcing fibres (4) which are preimpregnated, stretched, immediately activated and wound between the two funds (2),
- injecting a liquid sealing resin (5) into the composite backbone (40),
- centrifuging the resin (5) onto the composite backbone (40),
- polymerising the resin (5).

2. The method for manufacturing a composite tank according to the preceding claim, **characterised in that** the reinforcing fibres (4) are wound until the composite backbone (40) is completely closed.

3. The method for manufacturing a composite tank according to claim 1, **characterised in that** the reinforcing fibres (4) are wound until the composite backbone (40) is partially closed.

4. The method for manufacturing a composite tank according to the preceding claim, **characterised in that** a counter-mould (6) is disposed around the composite backbone (40) before the liquid sealing resin (5) is injected.

5. The method for manufacturing a composite tank according to one of the preceding claims, **characterised in that** a structural layer (7) is wound onto the composite backbone (40).

6. The method for manufacturing a composite tank according to one of the preceding claims, **characterised in that** the reinforcing fibres (4) are wound at a deposition angle of between 0 and -±10° relative to the axis X.

7. The method for manufacturing a composite tank according to one of the preceding claims, **characterised in that** the reinforcing fibres (4) comprise carbon fibres.

8. The method for manufacturing a composite tank according to one of the preceding claims, **characterised in that** the reinforcing fibres (4) comprise glass fibres.

9. The method for manufacturing a composite tank according to one of the preceding claims, **characterised in that** the reinforcing fibres (4) comprise aramid fibres.

10. The method for manufacturing a composite tank according to one of the preceding claims, **characterised in that** the polymerisation is a photopolymerisation.

11. The method for manufacturing a composite tank according to one of the preceding claims, **characterised in that** making the composite backbone (4) is done by a robotic arm (5) comprising a head (50) for depositing the reinforcing fibres and a light source (51).
